(19) Europäisches Patentamt
European Patent Office
Office européen des brevets

(11) **EP 2 543 845 A1**

(12) **EUROPEAN PATENT APPLICATION**

(43) Date of publication:
**09.01.2013 Bulletin 2013/02**

(51) Int Cl.:
**F02B 37/013** (2006.01)

(21) Application number: **11172695.6**

(22) Date of filing: **05.07.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Ford Global Technologies, LLC Dearborn, MI 48126 (US)**

(72) Inventors:
• **Chevalier, Alain**
  **4841 Henri-Chapelle (BE)**
• **Bartsch, Arno**
  **6225 DG Maastricht (NL)**
• **Petrovic, Simon**
  **6227TV Maastricht (NL)**

(74) Representative: **Drömer, Hans-Carsten Henry-Ford Str. 1 50735 Köln (DE)**

(54) **Method for determination of exhaust back pressure**

(57) A method for determination of exhaust back pressure (P3) for an engine (1) with a two-staged turbocharger (2) comprises the following steps:
- measuring the temperature (T3) downstream the engine (1), the temperature (T4) downstream the turbocharger (2) and/or the pressure (P4) downstream the turbocharger (2);
- determining a flow parameter for exhaust mass flow;
- estimating overall turbine pressure ratio (PRT) or difference with a model (15) of the turbocharger (2) on the basis of the measured and determined parameters;
- determining the exhaust back pressure (P3) downstream the engine (1) with the model (15).

Fig. 2

## EP 2 543 845 A1

**Description**

The invention is in general directed to a method for determination of exhaust back pressure especially for regulated two-stage boosting engines of motor vehicles.

The trend of higher specific power has resulted in the requirement not only for turbocharging but for multi-stage turbocharging such as series sequential or parallel sequential configurations. The exhaust manifold pressure parameter is a fundamental property of the engine and helps to determine the exhaust gas recirculation (EGR) flow rate which is important for NOx pollutant reduction. The exhaust back pressure (EBP) is therefore important for a model based air path control. A sensor is the first choice, however, the harsh exhaust conditions such as soot, heat and toxic gases adversely affect the durability of such a sensor. For speed of response a large exposure of the sensor element is required which reduces sensor durability further. The best sensor set and location may also be driven by aftertreatment requirements such as EGR cooler diagnostics or lean NOx trap (LNT) or diesel particulate filter (DPF) control.

It is an object of the invention to improve the determination of exhaust back pressure for engines.

This object is solved according to the invention with the features of claims 1 and 8, respectively.

In one aspect the invention is directed to a method for determination of exhaust back pressure for an engine with a two-staged turbocharger having the following steps:

- measuring the temperature downstream the engine, the temperature downstream the turbocharger and/or the pressure downstream the turbocharger;
- determining a flow parameter for exhaust mass flow;
- estimating overall turbine pressure ratio or difference with a model of the turbocharger on the basis of the measured and determined parameters;
- determining the exhaust back pressure downstream the engine with the model.

The method provides a replacement for a vulnerable physical exhaust back pressure (EBP) sensor which saves costs and increases reliability. The method acts as an EBP estimator or observer which models the two series turbines and valves as an orifice flow. The exhaust back pressure can be seen as a function of the air volume in the exhaust manifold and flow through the turbine vane restriction. The exhaust flow is an important factor for the base model characterisation and can be deducted from the measured parameters. This method of determining the exhaust back pressure (EBP) can be used for a model based charge control (MCC) and/or a model based air path control. Engines with single turbocharger applications can be controlled as well as engines with a parallel sequential biturbo mode with or without a diesel particle filter (DPF). The method works fast, reliably and accurately within limits of about +/- 5 to +/- 20 hPa depending on the state of the engine. The model can be of the kind of mean value engine model (MVEM) so that no pumping fluctuations occur.

The method may be corrected with the pressure downstream the turbocharger. This can be achieved by a multiplication of the pressure (overall turbine pressure ratio) or a subtraction of the pressure (overall turbine pressure difference). Clipping between minimal and maximal boundaries can be used as a further signal correction or as part of the pressure correction. The correction enhances the reliability of the method and eases the transfer and the further processing of the method's results.

A regression model as for example a third order curve for a fixed high pressure turbine bypass valve (TBV) may be utilized. The exhaust back pressure can be inferred through a regression model of the turbocharger configuration as a variable orifice in the exhaust. The model is set up within certain boundaries or values for the TBV. It can be beneficial to set up a new model for each TBV position or range and to activate or adapt the specific model accordingly. Alternatively, one can integrate the TBV position or range into the model.

The flow parameter may have the form of a reduced flow, a corrected flow or a pseudo reduced flow. The flow parameter can be calculated from different temperatures and pressures. For setting up the model the definition of the flow parameter can be chosen according to availability or preciseness of data or sensors.

The flow parameter may be modelled or calculated as mass airflow plus injected fuel. The flow can be measured with dynamic estimation, a so called air system model which is easy to model and delivers robust results.

The temperature downstream the turbocharger may be corrected for loss of temperature for a sensor position further downstream. This can remedy the effects of a sensor which is placed too far away from the required location. The correction allows easy adaptation to different hardware environments.

The parameter for the high pressure turbine bypass valve may be a setpoint or it can be measured. The model works reliable with both choices. The choice which is easier to implement can be selected.

In a further aspect the invention is directed to an engine with a two-staged turbocharger, comprising a sensor for the temperature downstream the engine, a sensor for the temperature downstream the turbocharger and/or a sensor for the pressure downstream the turbocharger and a control device adapted to execute the method for determination of exhaust back pressure as described above. The same advantages and modifications as described above apply as well.

2

The accompanying drawings are included to provide a further understanding of embodiments. Other embodiments and many of the intended advantages will be readily appreciated as they become better understood by reference to the following detailed description. The elements of the drawings do not necessarily scale to each other. Like reference numbers designate corresponding similar parts.

Fig. 1 illustrates a schematic view of a turbocharged engine.

Fig. 2 illustrates a schematic view of a model setup for the engine according to the invention.

Fig. 3 shows a measurement sweep for different values of the high pressure turbine bypass valve (TBV).

Fig. 4 shows a diagram of flow vs. overall turbine pressure ratio (PRT).

Fig. 5 illustrates a schematic view of the model according to the invention.

Fig. 6 shows a diagram of the exhaust back pressure.

Fig. 7 shows diagrams with the tolerances of the results estimated according to the invention.

Fig. 8 shows diagrams for different PRT and DELTA P vs. flow parameterisation forms.

In the following detailed description, reference is made to the accompanying drawings which form a part hereof and in which are shown by way of illustration specific embodiments in which the invention may be practised. In this regard, directional terminology, such as "top" or "bottom" etc. is used with reference to the orientation of the Figure(s) being described. Because components of embodiments can be positioned in a number of different orientations, the directional terminology is used for purposes of illustration and is in no way limiting. It is to be understood that other embodiments may be utilized and structural or logical changes may be made without departing from the scope of the present invention. The following detailed description, therefore, is not to be taken in a limiting sense, and the scope of the present invention is defined by the appended claims.

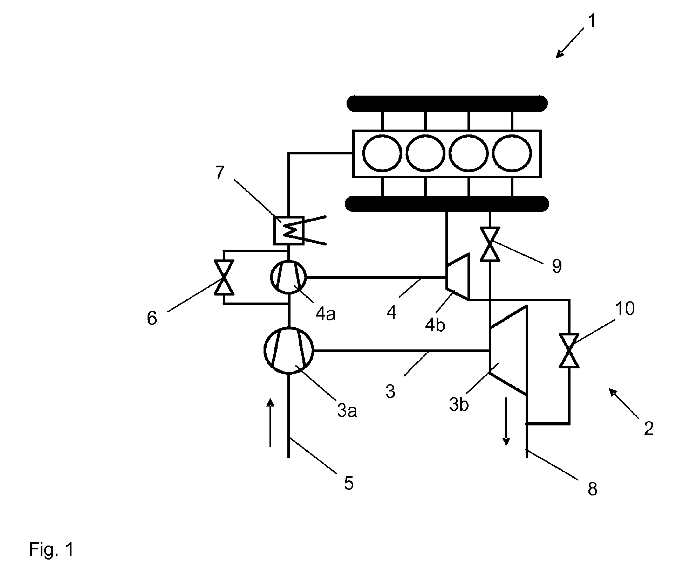

Figure 1 shows an engine 1 like a four cylinder combustion engine with a turbocharger 2. The turbocharger 2 has two stages, a low pressure (LP) stage 3 and a high pressure (HP) stage 4.

An air intake 5 is in communication with a low pressure compressor 3a of the low pressure turbocharger stage 3. Further downstream or behind the LP stage 3 a high pressure compressor 4a of the high pressure turbocharger stage 4 is arranged. Parallel to the HP compressor 4a a compressor bypass valve (CBV) 6 is arranged. The valve 6 can be active or passive. Further downstream the HP compressor 4a and the valve 6 an intercooler 7 is arranged in front of the engine 1.

An exhaust system 8 is arranged downstream the engine 1. Directly after the engine 1 a high pressure turbine 4b of the HP stage 4 is provided in parallel with a HP turbine bypass valve (TBV) 9. Further downstream a low pressure turbine 3b of the LP stage 3 is provided in parallel with a LP turbine waste gate (WG) 10.

The engine system comprises the actuators in the air path CBV 6, TBV 9 and WG 10, wherein TBV 9 and WG 10 control the boost pressure once a CBV position (open or closed) is set.

According to a standard control sequence WG 10 and CBV 6 are closed for low speed or torque while TBV 10 or the HP stage controls the boost pressure. For higher speed or torque the higher pressure forces CBV 6 to open, TBV 9 is fully open and WG 10 or the LP stage controls the boost pressure.

In an alternative control sequence the optimum WG 10 and TBV 9 are set simultaneously in dependence on the speed or load and the CBV 6 position. This can be called closed loop boost control on TBV 9 or WG 10.

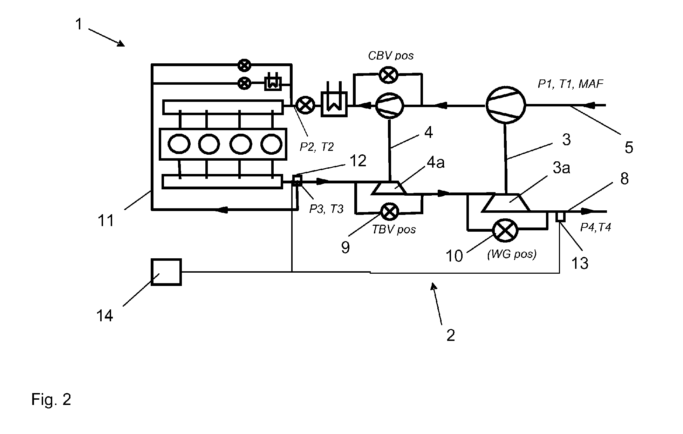

Figure 2 shows the engine 1 with turbocharger 2 for the setup of the model for determination of P3. P3 or exhaust back pressure is the pressure downstream or behind the engine 1 or between engine 1 and turbocharger 2. T3 is the temperature at this position which is usually measured for an exhaust gas recirculation (EGR) 11.

At the air intake 5 pressure P1, temperature T1 and mass air flow MAF are present. Pressure P2 and temperature T2 are present in front of the engine 1 i.e. between turbocharger 2 and engine 1. At the exhaust system 8 or at the interface to the exhaust system pressure P4 and temperature T4 are present. Here, the HP and LP turbines 4a and 3a and the valves 9 and 10 are seen as one unit. P4 and T4 are usually available from exhaust aftertreatment requirements. A waste gate WG 10 feedback measurement is not required.

Temperature T3 is measured with a sensor 12, pressure P4 and/or temperature T4 with a sensor 13. The sensors 12 and 13 are in communication with a control device 14 which runs the model for determination of P3. The model can first be run in a test environment like for example (S)HIL ((Soft-)Hardware-in-the-loop) and then implemented in a simpler controller or the like. On the other hand it is possible to run the model or certain parts of it on a computer or computational unit for example of engine control. The control device can be or can be part of a boost controller for controlling the boosting procedures.

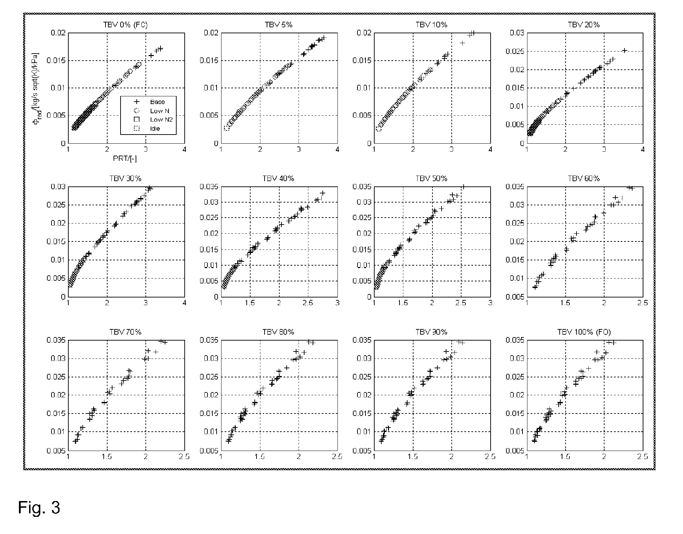

Figure 3 shows a set of diagrams each showing the flow vs. the overall turbine pressure ratio PRT. i.e. across both the HP and LP turbine stages. The data are created from DOE calculations with a real-time engine model. Each diagram has a fixed HP turbine bypass valve TBV 9. The diagram in the upper left is taken for a fully closed (FC) TBV while the diagram in the lower right is taken for a fully opened (FO) TBV. The diagrams in between show middle positions of the TBV with the degree of opening in percent. The values in each diagram are taken for different states of the engine with varying waste gate WG 10, engine speed and torque, and updates for lower engine speed, including idle.

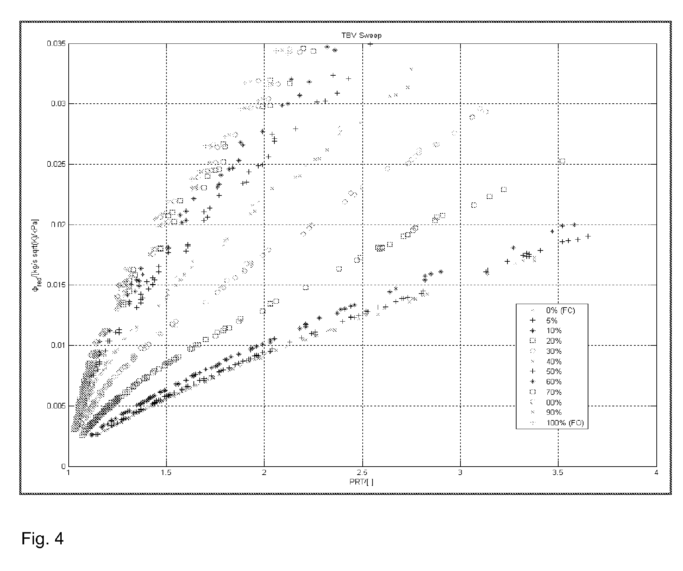

The diagrams of Figure 3 are combined to Figure 4 which shows the overall flow vs. the overall turbine pressure ratio PRT. This curve parameterises the overall turbine pressure ratio PRT as a function of flow parameter for a fixed TBV position. The waste gate WG 10 is varied and the CBV 6 is passive. For this diagram the flow parameter is a function of the exhaust flow, T3 and P4. Other parameterisations are possible some of which are discussed later. More data can be collected in order to improve the fit around PRT=1. In this data mapping no EGR flow is included. The overall turbine pressure ratio PRT is looked at. However, one can use the overall or total turbine pressure difference across both turbine stages DELTA_P as well. If the ratio PRT is mentioned in this text the difference DELTA_P is also encompassed. The curve for DELTA_P has a similar form.

Now, the model is parameterised. A measure of the two stage pressure can be given in two forms as discussed above. First, one can use the overall or total (across both turbine stages 4b and 3b) turbine pressure ratio PRT, defined as:

$$\Pi_{R2S} = \frac{P_3}{P_4}$$

Or one can use the overall or total turbine pressure difference across both turbine stages DELTA_P, defined as:

$$\Delta P_{R2S} = P_3 - P_4$$

The flow parameter can be defined in four forms. First, we have the reduced flow (standard), defined as:

$$FLOW1 = \Phi \frac{\sqrt{T_3}}{P_3}$$

The second possibility is the corrected flow (standard), defined as:

$$FLOW2 = \Phi \frac{\sqrt{T_3/T_{3REF}}}{P_3/P_{3REF}}$$

wherein $P_{3REF}$ and $T_{3REF}$ are reference conditions.

The third definition is the pseudo reduced flow 1, defined as:

$$FLOW3 = \Phi \frac{\sqrt{T_3}}{P_4}$$

And the last definition is the pseudo reduced flow 2, defined as:

$$FLOW4 = \Phi \frac{\sqrt{T_4}}{P_4}$$

The basic structure of the model can be parameterised as a third order curve for a fixed TBV position as:

$$\Pi_{R2S} \, or \, \Delta P_{R2S} = P3\_const\_CUR(X_2) + X_1 * P3\_X1\_CUR(X_2) + \dots$$
$$X_1^2 * P3\_X2\_CUR(X_2) + X_1^3 * P3\_X3\_CUR(X_2)$$

wherein

$$X_2 = TBV$$
$$X_1 = FLOW_x$$

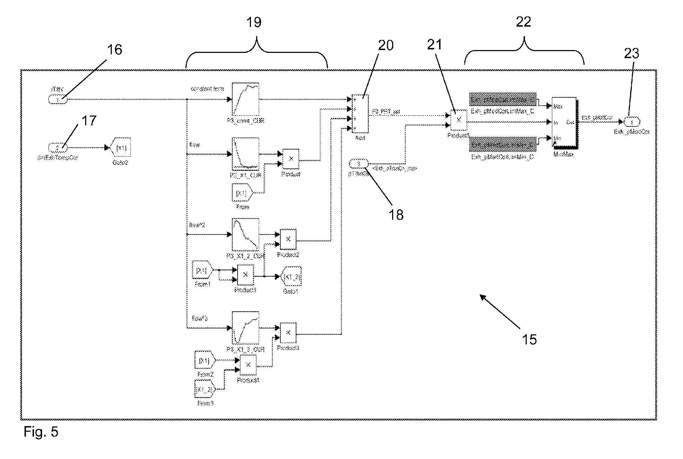

Figure 5 shows an implementation of the model 15. Inputs of the model are TBV input 16, flow input 17 and P4 input 18. At a calculation stage 19 the single terms of the model curve are calculated which are then added at an addition unit 20 to form the third order curve.

At multiplier 21 the third order curve is multiplied with the pressure P4 in case the overall turbine pressure ratio PRT is utilized. In case of the overall turbine pressure difference DELTA_P or P3 - P4 the pressure P4 is added (with an addition unit 21 or with the addition unit 20). The operations follow these formulas:

$$P_3 = \Pi_{R2S} * P_4$$
$$P_3 = \Delta P_{R2S} + P_4$$

This step can be referred to as a signal correction with the pressure P4. The result is a value or signal for the pressure P3 or the exhaust back pressure.

In a further stage 22 the signal for the pressure P3 is clipped or corrected between minimal and maximal limits or boundaries to be output at an output 23.

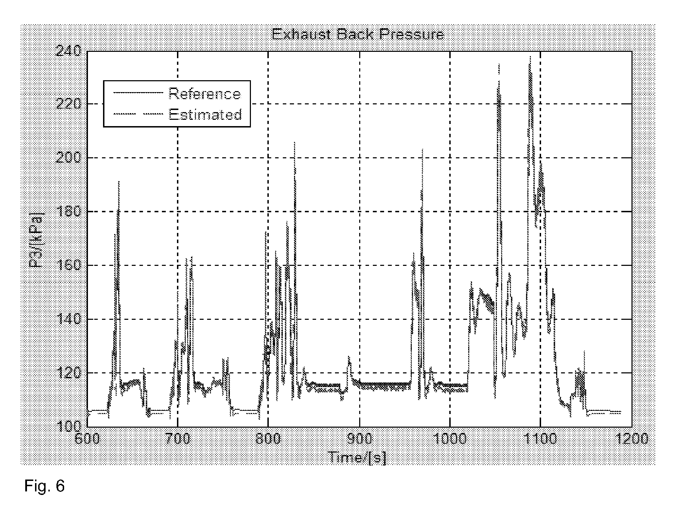

Figure 6 shows a simulation result for the air path. The exhaust back pressure P3 is shown over time. Here, the last 580 seconds of an NEDC (New European Drive Cycle) drive cycle are shown. For the simulation the model was integrated into a SIL environment and a simplified EGR and boost controller was created. The original data did not include EGR. The actual results depend on hardware configurations like turbocharger maps, valve dimensions and the like. Here, only TBV is actuated over the drive cycle.

The diagram shows a measured reference curve and the estimated or calculated curve which is the result of the model. It can be seen that P3 is estimated well over the complete time span.

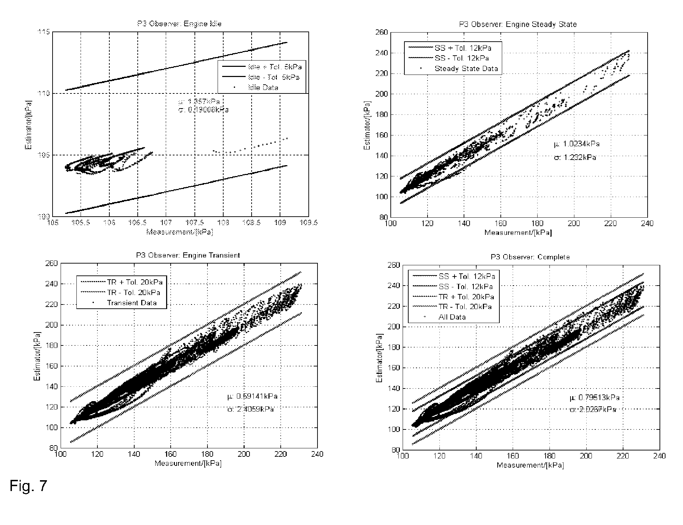

Figure 7 shows diagrams with P3 results from the NEDC drive cycle with EGR. The estimated or calculated pressure is shown versus the measured pressure for different states of the engine 1. The parallel lines are tolerance boundaries and the curves in between are the estimated values.

The diagram in the upper left shows results for an engine idle state. As can be seen accuracy lies clearly in the boundaries of +/- 5 kPa. The upper right diagram shows results for an engine steady state with an accuracy within +/-12 kPa. The diagram in the lower left shows values for an engine transient state with an accuracy within +/- 20 kPa. The diagram in the lower right shows the complete or combined results for all engine states. Most of the results are between the +/- 12 kPa tolerances and all of the results lie within the +/- 20 kPa tolerances. Therefore, the model works with good accuracy.

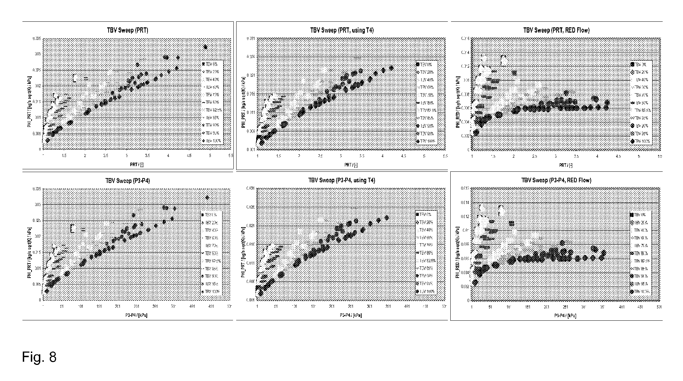

Figure 8 shows diagrams for different PRT and DELTA P vs. flow parameterisation forms. These diagrams result from representative series sequential hardware on a two litre EURO VI diesel engine. An optimised calibration for engine torque with given TSS and pre turbine, post compressor temperature was chosen.

The data include different WG openings, from fully closed to fully open, and the data are plotted for fixed TBV positions.

The upper diagrams show the flow PHI vs. the pressure ratio PRT while the lower diagrams show the flow PHI vs. the pressure difference P3 - P4. The two left diagrams show data for a TBV sweep while the two middle diagrams show data for a TBV sweep with the use of the temperature T4. The two diagrams to the right show data for a reduced flow. The first two columns are very similar since the only difference is a scaling by a square root of T3 or T4. However, the third column with reduced flow has noticeably less dispersion, with a flatter response at larger PRT's or DELTA P's. The case of corrected flow is not shown as this is only a constant scaling for the reduced flow case. All curves have a continuous profile which shows the quality of the model.

## Claims

1. Method for determination of exhaust back pressure (P3) for an engine (1) with a two-staged turbocharger (2), with the following steps:

   - measuring the temperature (T3) downstream the engine (1), the temperature (T4) downstream the turbocharger (2) and/or the pressure (P4) downstream the turbocharger (2);
   - determining a flow parameter for exhaust mass flow;
   - estimating overall turbine pressure ratio (PRT) or difference with a model (15) of the turbocharger (2) on the basis of the measured and determined parameters;
   - determining the exhaust back pressure (P3) downstream the engine (1) with the model (15).

2. Method for determination of exhaust back pressure according to claim 1, wherein the method is corrected with the pressure (P4) downstream the turbocharger (2).

3. Method for determination of exhaust back pressure according to claim 1 or 2, wherein a regression model (15) as for example a third order curve for a fixed high pressure turbine bypass valve (TBV).

4. Method for determination of exhaust back pressure according to claims 1 to 3, wherein the flow parameter has the form of a reduced flow, a corrected flow or a pseudo reduced flow.

5. Method for determination of exhaust back pressure according to claim 4, wherein the flow parameter is modelled or calculated as mass airflow plus injected fuel.

6. Method for determination of exhaust back pressure according to claims 1 to 5, wherein the temperature (T4) downstream the turbocharger (2) is corrected for loss of temperature for a sensor position further downstream.

7. Method for determination of exhaust back pressure according to claims 3 to 6, wherein the parameter for the high pressure turbine bypass valve (9) is a setpoint or is measured.

8. Engine with a two-staged turbocharger, comprising a sensor (12) for the temperature (T3) downstream the engine (1), a sensor (13) for the temperature (T4) downstream the turbocharger (2) and/or a sensor (13) for the pressure (P4) downstream the turbocharger (2) and a control device (14) adapted to execute the method for determination of exhaust back pressure (P3) according to claims 1 to 7.

Fig. 1

Fig. 2

Fig. 3

Fig. 4

Fig. 5

Fig. 6

Fig. 7

Fig. 8

Europäisches
Patentamt

European
Patent Office

Office européen
des brevets

# EUROPEAN SEARCH REPORT

Application Number

EP 11 17 2695

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CHIARA, F. ET AL.: "An Exhaust Manifold Pressure Estimator for a Two-Stage Turbocharged Diesel Engine", AMERICAN CONTROL CONFERENCE 2011, 29 June 2011 (2011-06-29), pages 1549-1554, XP002670307, San Franzisco * page 1550 - page 1554 * | 1-8 | INV. F02B37/013 |
| Y | SHU, YONG ET AL.: "Two-Stage Turbocharger Modeling for Engine Control and Estimation", PROCEEDINGS OF IMECE2007, 11 November 2007 (2007-11-11), pages 1-10, XP002670308, Seattle * pages 6-10 * | 1-8 | |
| A | CANOVA, M. ET AL.: "Design and Validation of a Control-Oriented Model of a Diesel Engine with Two-Stage Turbocharger", SAE INT. J. FUELS LUBR (SAE TECHNICAL PAPERS NR. 2009-04-0122), vol. 2, no. 2, 13 September 2009 (2009-09-13), pages 387-397, XP002670239, DOI: 10.4271/2009-24-0122 * page 396 * | 1-8 | TECHNICAL FIELDS SEARCHED (IPC)<br><br>F02D<br>F02B |
| A | DE 10 2009 051475 A1 (GM GLOBAL TECH OPERATIONS INC [US]) 10 June 2010 (2010-06-10) * paragraphs [0126] - [0128] * | 1,8 | |

The present search report has been drawn up for all claims

| Place of search | Date of completion of the search | Examiner |
|---|---|---|
| The Hague | 24 February 2012 | Röttger, Klaus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 11 17 2695

This annex lists the patent family members relating to the patent documents cited in the above-mentioned European search report.
The members are as contained in the European Patent Office EDP file on
The European Patent Office is in no way liable for these particulars which are merely given for the purpose of information.

24-02-2012

| Patent document cited in search report | Publication date | Patent family member(s) | Publication date |
|---|---|---|---|
| DE 102009051475 A1 | 10-06-2010 | CN 101737188 A<br>DE 102009051475 A1<br>US 2010107630 A1 | 16-06-2010<br>10-06-2010<br>06-05-2010 |